# EUROPEAN PATENT SPECIFICATION

(11) **EP 3 609 177 B1**
(45) Date of publication and mention of the grant of the patent: **03.03.2021**
(21) Application number: 19190191.7
(22) Date of filing: 06.08.2019
(51) Int. Cl.: H04N 5/355

(54) **CONTROL METHOD, CONTROL APPARATUS, IMAGING DEVICE, AND ELECTRONIC DEVICE**
STEUERUNGSVERFAHREN, STEUERUNGSVORRICHTUNG, BILDGEBUNGSVORRICHTUNG UND ELEKTRONISCHE VORRICHTUNG
PROCÉDÉ DE COMMANDE, APPAREIL DE COMMANDE, DISPOSITIF D'IMAGERIE ET DISPOSITIF ÉLECTRONIQUE

(30) Priority: 06.08.2018 CN 201810885076
(43) Date of publication of application: 12.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Gong, Dongguan, Guangdong 523860 (CN)
(74) Representative: Manitz Finsterwald Patent- und Rechtsanwaltspartnerschaft mbB

(56) References cited:
- WO-A1-2012/110894
- CN-A- 105 227 858
- CN-A- 107 205 120
- CN-A- 108 200 354
- CN-A- 108 270 977
- US-A1- 2017 163 877
- HOU XINGLIN ET AL: "HDR imaging based on region segmentation", THE 27TH CHINESE CONTROL AND DECISION CONFERENCE (2015 CCDC), IEEE, 23 May 2015 (2015-05-23), pages 1111-1116, XP033178231, DOI: 10.1109/CCDC.2015.7162083 [retrieved on 2015-07-17]

## Description

### TECHNICAL FIELD

The present disclosure relates to a field of electronic device technology, and more particularly, to a control method, a control apparatus, an imaging device, an electronic device, and a readable storage medium.

### BACKGROUND

As terminal technology develops, more and more users use electronic devices to capture images. In the backlight scene, when the user uses the front camera of the electronic device to take selfies, since the user is located between the light source and the electronic device, the face exposure is likely to be insufficient. If the exposure is adjusted to increase the brightness of the face, the background region will be overexposed, and even the shooting scene will not be clearly displayed.

In the related art, the high dynamic range (HDR) technology is used to control the pixel array to sequentially expose with different exposure time and output a plurality of images, and then fuse the plurality of images to obtain the high dynamic range image, so as to improve the imaging effect of the facial region and the background region.

However, the inventors have found that the imaging qualities of high dynamic range images captured in this manner vary with the shooting scenes. In some shooting scenes, the image quality is not high. Therefore, this single shooting mode is not adaptive to multiple shooting scenes.

CNI08200354A and EP3537710A1 relate to an imaging control method. The imaging control method includes: obtaining a first gain index value according to an environment luminance value of a shooting environment and a preset target luminance value; and determining a shooting mode for shooting according to the first gain index value and preset switching condition information, the shooting mode including a bright light mode and a dark light mode.

WO2012110894A1 relates to dynamic range extension by combining differently exposed hand-held device-acquired images. In details, two or more digital images of a same scene are captured with different exposure levels. Image pairs are generated that have a same exposure level from the image data of differently exposed images by adjusting the exposure of at least one of the pair of images. A ghosting map is generated based on differences between the pair of images adjusted to the same exposure. A blurred ghosting map is generated and alpha blending is performed.

### SUMMARY

Embodiments of the present disclosure relate to a control method according to independent claim 1, a control apparatus according to independent claim 7, and an imaging device according to claim 13. Further aspects of the present application are defined by the dependent claims.

Embodiments of a first aspect of the present disclosure provide a control method. The control method is applied to an imaging device. The imaging device includes a pixel unit array composed of a plurality of photosensitive pixels, and the control method includes:
controlling the pixel unit array to measure ambient brightness values;
determining whether a current scene is a backlight scene according to the ambient brightness values measured by the pixel unit array;
when the current scene is the backlight scene, determining the ambient brightness value of a region according to the ambient brightness values measured by the photosensitive pixels in the pixel unit array, wherein the region includes at least one photosensitive pixel; and
controlling the photosensitive pixels in the region to shoot in a shooting mode, according to the ambient brightness value of the region and a stability of an imaging object in the region.

Embodiments of a second aspect of the present disclosure provide a control apparatus. The control apparatus is applied to an imaging device. The imaging device includes a pixel unit array composed of a plurality of photosensitive pixels. The control apparatus includes a measuring module, a judging module, a determining module and a control module.

The measuring module is configured to control the pixel unit array to measure ambient brightness values. The judging module is configured to determine whether a current scene is a backlight scene, according to the ambient brightness values measured by the pixel unit array. The determining module is configured to determine an ambient brightness value of a region in the pixel unit array according to ambient brightness values measured by the photosensitive pixels in the pixel unit array when the current scene is the backlight scene, in which the region includes at least one photosensitive pixel. The control module is configured to control the photosensitive pixels in the region to shoot in a corresponding shooting mode, according to the ambient brightness value of the region and a stability of an imaging object in the region.

Embodiments of a third aspect of the present disclosure provide an imaging device. The imaging device includes a pixel unit array composed of a plurality of photosensitive pixels, and the imaging device further includes a processor.

The processor is configured to: control the pixel unit array to measure ambient brightness values, determine whether a current scene is a backlight scene according to the ambient brightness values measured by the pixel unit array; when the current scene is the backlight scene, determine the ambient brightness value of a region in the pixel unit array according to the ambient brightness values measured by the photosensitive pixels in the pixel unit array, in which the region includes at least one photosensitive pixel; and control the photosensitive pixels in the region to shoot in a corresponding shooting mode according to the ambient brightness value of the region and a stability of an imaging object in the region.

Embodiments of a fourth aspect of the present disclosure provide an electronic device including a memory, a processor, and a computer program stored in the memory and executable by the processor. When the processor executes the program, the control method illustrated in the above embodiments of the present disclosure is implemented.

Embodiments of a fifth aspect of the present disclosure provide a computer readable storage medium having a computer program stored thereon, wherein the program is configured to be executed by a processor to implement a control method as illustrated in the above embodiments of the present disclosure.

In the present disclosure, by selecting the suitable shooting mode according to the ambient brightness value measured in each region and the stability of the imaging object in each region, i.e., adopting the corresponding shooting mode according to different shooting scenes, it can solve the problem that the image captured is vague when the imaging object is unstable, improve the imaging effect and imaging quality, and improve the user's shooting experience.

Additional aspects and advantages of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and/or advantages of embodiments of the present disclosure will become apparent and more readily appreciated from the following descriptions made with reference to the accompanying drawings, in which:
FIG. 1 is a schematic flowchart of a control method according to Embodiment 1 of the present disclosure.
FIG. 2 is a schematic diagram of a gray histogram corresponding to a backlight scene according to embodiments of the present disclosure.
FIG. 3 is a schematic flowchart of a control method according to Embodiment 2 of the present disclosure.
FIG. 4 is a schematic flowchart of a control method according to Embodiment 3 of the present disclosure.
FIG. 5 is a schematic flowchart of a control method according to Embodiment 4 of the present disclosure.
FIG. 6 is a schematic flowchart of a control method according to Embodiment 5 of the present disclosure.
FIG. 7 is a schematic flowchart of a control method according to Embodiment 6 of the present disclosure.
FIG. 8 is a schematic block diagram of a control apparatus according to Embodiment 7 of the present disclosure.
FIG. 9 is a schematic block diagram of a control apparatus according to Embodiment 8 of the present disclosure.
FIG. 10 is a schematic diagram of an electronic device according to embodiments of the present disclosure.
FIG. 11 is a schematic diagram of an image processing circuit according to embodiments of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

At present, a HDR image is generally implemented by compositing a plurality of images, for example, by compositing three images (one long exposure image, one medium exposure image, and one short exposure image). In this manner, when the electronic device is unstable or a moving speed of an imaging object in the image is high, it is easy to cause a problem of poor quality of the composited HDR image (e.g., "double image", "ghosting") due to a change in the shooting scene.

The present disclosure provides a control method mainly directed to the technical problem of poor quality of HDR images in the related art.

With the control method of embodiments of the present disclosure, the pixel unit array is controlled to measure ambient brightness values, whether a current scene is a backlight scene is determined according to the ambient brightness values measured by the pixel unit array, and if the current scene is the backlight scene, the ambient brightness value of each region in the pixel unit array is determined according to the ambient brightness values measured by respective photosensitive pixels in the pixel unit array, and the photosensitive pixels in each region are controlled to shoot in the corresponding shooting mode according to the ambient brightness value of the region and the stability of the imaging object in the region. In the present disclosure, by selecting the suitable shooting mode for shooting according to the ambient brightness value of each region and the stability of the imaging object in each region, i.e., adopting the corresponding shooting mode for shooting according to different shooting scenes, it can solve the problem that the image captured is vague when the imaging object is unstable, improve the imaging effect and imaging quality, and improve the user's shooting experience.

The control method, control apparatus, imaging device, electronic device, and readable storage medium of embodiments of the present disclosure are described below with reference to the accompanying drawings.

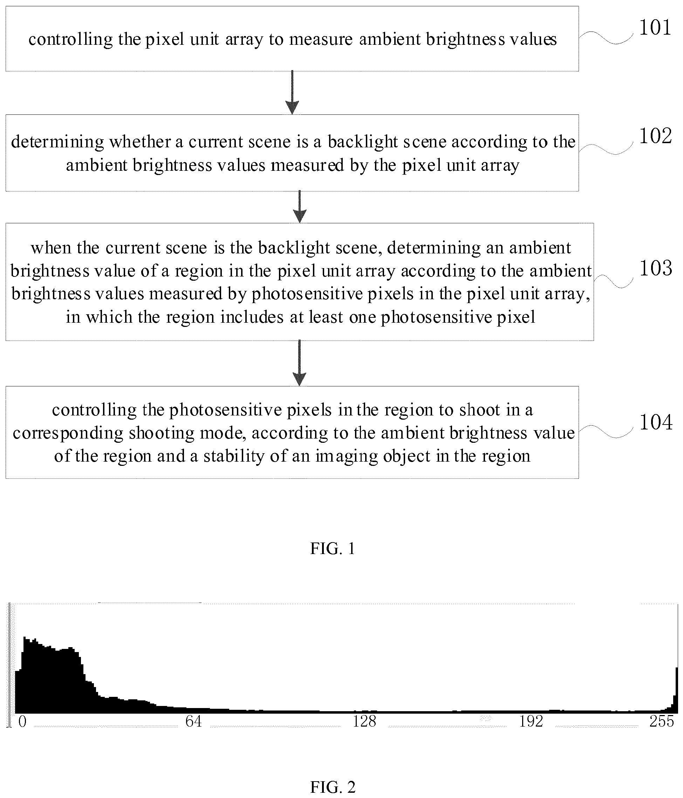

FIG. 1 is a schematic flowchart of a control method according to Embodiment 1 of the present disclosure.

The control method of this embodiment of the present disclosure is applied to an imaging device. The imaging device includes a pixel unit array composed of a plurality of photosensitive pixels.

As illustrated in FIG. 1, the control method includes the followings.

At block 101, a pixel unit array is controlled to measure ambient brightness values.

In embodiments of the present disclosure, the pixel unit array is controlled to measure the ambient brightness values. In detail, the photosensitive pixels in the pixel unit array are controlled to measure the ambient brightness values, such that the ambient brightness values measured by respective photosensitive pixels can be obtained.

At block 102, it is determined whether a current scene is a backlight scene, according to the ambient brightness values measured by the pixel unit array.

It is understood that, generally, when the current scene is the backlight scene, the ambient brightness values measured by respective photosensitive pixels in the pixel unit array have a significant difference. Therefore, as a possible implementation of the embodiment of the present disclosure, the brightness value of the imaging object and the brightness value of the background region can be determined according to the ambient brightness values measured by the pixel unit array, and whether the difference between the brightness value of the imaging object and the brightness value of the background region is greater than a preset threshold can be determined. When the difference between the brightness value of the imaging object and the brightness value of the background region is greater than the preset threshold, it is determined that the current scene is the backlight scene, and when the difference between the brightness value of the imaging object and the brightness value of the background region is less than or equal to the preset threshold, the current scene is determined to be a non-backlight scene.

The preset threshold may be preset in the built-in program of the electronic device, or may be set by the user, which is not limited. The imaging object is an object that requires to be captured by an electronic device, such as a person (or a human face), an animal, an object, a scene, and the like.

As another possible implementation of the embodiment of the present disclosure, the gray histogram may be generated according to the gray values corresponding to the ambient brightness values measured by the pixel unit array, and it may be determined whether the current scene is the backlight scene according to the ratio of the number of photosensitive pixels in each gray scale range.

For example, when according to the gray histogram, the ratio grayRatio of the number of the photosensitive pixels whose grayscale values corresponding to the measured ambient brightness values in the pixel unit array are in the grayscale range [0, 20], to the number of all the photosensitive pixels in the pixel unit array is greater than a first threshold, for example, which may be 0.135, and the ratio grayRatio of the number of the photosensitive pixels whose grayscale values corresponding to the measured ambient brightness values are in the grayscale range [200, 256), to the number of all the photosensitive pixels in the pixel unit array is greater than a second threshold, for example, which may be 0.0899, it is determined that the current scene is the backlight scene.

Alternatively, when according to the gray histogram, the ratio grayRatio of the number of the photosensitive pixels whose grayscale values corresponding to the measured ambient brightness values in the pixel unit array are in the grayscale range [0, 50], to the number of all the photosensitive pixels in the pixel unit array is greater than a third threshold value, for example, which may be 0.3, and the ratio grayRatio of the number of the photosensitive pixels whose grayscale values corresponding to the measured ambient brightness values are in the grayscale range [200, 256), to the number of all the photosensitive pixels in the pixel unit array is greater than a fourth threshold, for example, which may be 0.003, it is determined that the current scene is the backlight scene.

Alternatively, when according to the gray histogram, the ratio grayRatio of the number of the photosensitive pixels whose grayscale values corresponding to the measured ambient brightness values in the pixel unit array are in the grayscale range [0, 50], to the number of all the photosensitive pixels in the pixel unit array is greater than a fifth threshold, for example, which may be 0.005, and the ratio grayRatio of the number of the photosensitive pixels whose grayscale values corresponding to the measured ambient brightness values are in the grayscale range [200, 256), to the number of all the photosensitive pixels in the pixel unit array is greater than a sixth threshold, for example, which may be 0.25, it is determined that the current scene is the backlight scene.

As an example, the gray histogram corresponding to the backlight scene can be as illustrated in FIG. 2.

At block 103, when the current scene is the backlight scene, the ambient brightness value of a region in the pixel unit array is determined according to the ambient brightness values measured by respective photosensitive pixels in the pixel unit array, in which the region includes at least one photosensitive pixel.

It can be understood that different photosensitive pixels are used to measure the ambient brightness values of different regions in the current shooting environment, and the ambient brightness values measured by different photosensitive pixels may be different. In order to improve the processing effect of the captured image, in the present disclosure, the pixel unit array may be divided into regions to obtain respective regions in the pixel unit array, so that subsequent processing may be performed for each region by using a corresponding image processing strategy.

As a possible implementation of the embodiment of the present disclosure, the pixel unit array may be divided into regions according to the ambient brightness values measured by respective photosensitive pixels in the pixel unit array. In detail, the photosensitive pixels with similar ambient brightness values measured in the pixel unit array can be divided into the same region, in this case, the ambient brightness values measured by the photosensitive pixels belonging to the same region are similar. After determining regions in the pixel unit array, for each region, the ambient brightness value of the region may be determined according to the ambient brightness values measured by photosensitive pixels in the region. For example, an average value of the ambient brightness values measured by the photosensitive pixels in the region may be calculated, and the average value may be used as the ambient brightness value of the region. Or, since the ambient brightness values measured by the photosensitive pixels in the region are similar, the maximum or minimum value of the ambient brightness values measured by the photosensitive pixels in the region may be used as the ambient brightness value of the region, which is not limited thereto.

As another possible implementation of the embodiment of the present disclosure, the pixel unit array may be fixedly divided into regions in advance, and then the ambient brightness value of each region in the pixel unit array is determined according to the ambient brightness values measured by the photosensitive pixels in the same region. For example, for each region, an average value of the ambient brightness values measured by the photosensitive pixels in the region may be calculated, and the average value may be used as the ambient brightness value of the region. Or, other algorithms may be adopted to determine the ambient brightness value of the region, which is not limited thereto.

At block 104, the photosensitive pixels in the region are controlled to shoot in the corresponding shooting mode, according to the ambient brightness value of the region and the stability of the imaging object in the region.

In embodiments of the present disclosure, when the current scene is the backlight scene, it indicates that the ambient brightness values measured by photosensitive pixels in the pixel unit array has a significant difference. Therefore, it is necessary to composite a high dynamic range image, such that the high dynamic range image can clearly display the current shooting scene.

In detail, for each region in the pixel unit array, when the ambient brightness values measured in the region are high, the electric signal obtained by each photosensitive pixel in the region is strong, with less noise, to separately output the original pixel information, so that the resolution of the captured target image is high; and when the ambient brightness values measured in the region are low, the electrical signal obtained by each photosensitive pixel in the region is weak, with more noise, at this time, the target image can be captured by switching to the dim mode (the default operation is in the vivid light mode when the imaging device is turned on). The dim mode corresponds to a dim environment, and it can be understood that the image effect of the target image taken in the dim mode in the dim environment is better.

Further, when the ambient brightness values measured in the region are high, it is also possible to determine whether the imaging object in the region is stable. When the imaging object in the region is unstable, a high dynamic range image can be composited by one image to prevent the phenomenon of "ghosting" from occurring; when the imaging object in the region is stable, a high dynamic range image can be composited through a plurality of images, so that the current shooting scene can be clearly displayed through the high dynamic range image, and the imaging effect and imaging quality can be improved.

With the control method of embodiments of the present disclosure, the pixel unit array is controlled to measure the ambient brightness value, whether the current scene is the backlight scene is determined according to the ambient brightness values measured by the pixel unit array, and if the current scene is the backlight scene, the ambient brightness value of each region in the pixel unit array is determined according to the ambient brightness values measured by photosensitive pixels in the pixel unit array, and the photosensitive pixels in each region are controlled to shoot in the corresponding shooting mode according to the ambient brightness value of the region and the stability of the imaging object in the region. In the present disclosure, by selecting the suitable shooting mode for shooting according to the ambient brightness value of each region and the stability of the imaging object in each region, i.e., adopting the corresponding shooting mode for shooting according to different shooting scenes, it can solve the problem that the image captured is vague when the imaging object is unstable, improve the imaging effect and imaging quality, and improve the user's shooting experience.

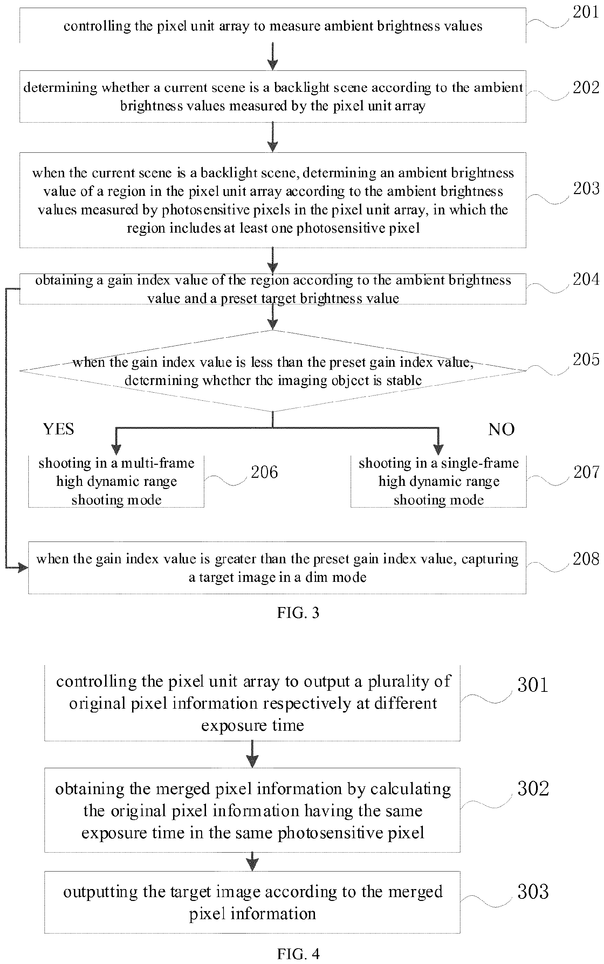

In order to clearly illustrate the previous embodiment, this embodiment provides another control method. FIG. 3 is a schematic flowchart of a control method according to Embodiment 2 of the present disclosure.

As illustrated in FIG. 3, the control method may include the followings.

At block 201, a pixel unit array is controlled to measure ambient brightness values.

At block 202, it is determined that whether the current scene is the backlight scene, according to the ambient brightness values measured by the pixel unit array.

At block 203, when the current scene is the backlight scene, the ambient brightness value of a region in the pixel unit array is determined according to the ambient brightness values measured by the photosensitive pixels in the pixel unit array, in which the region includes at least one photosensitive pixel.

For the implementation of the acts at blocks 201-203, reference can be made to the implementation of the acts at blocks 101-103 in the above embodiment, which will not be elaborated here.

At block 204, a gain index value of the region is obtained according to the ambient brightness value and the preset target brightness value.

In embodiments of the present disclosure, for each region in the pixel unit array, the ambient brightness value of the region may be compared with a preset target brightness value to obtain the gain index value of the region, in which the gain index value is used to represent the brightness of the environment measured by the photosensitive pixels in each region, and the gain index value corresponds to the gain value of the imaging device. When the measured ambient brightness value of the region is less than the target brightness value, it indicates that it is necessary to provide a larger gain value for the imaging device, and correspondingly, the gain index value also needs to be large. In this case, the photosensitive pixel detects less light, and generates a small level signal, and a larger gain value is required to increase the level signal for subsequent calculation of the target image. Therefore, when the gain index value is large, it indicates that the environment measured by the photosensitive pixels in the region is dim; when the ambient brightness value is greater than the target brightness value, it indicates that the imaging device needs to be provided with a small gain value, and correspondingly, the gain index value is small, and in this case, the photosensitive pixel detects more light, the generated level signal is also large, and only a small gain value is required to increase the level signal for subsequent calculation of the target image. Therefore, when the gain index value is small, it indicates that the environment measured by the photosensitive pixel in the region is bright.

In a specific embodiment of the present disclosure, the difference value between the ambient brightness value and the target brightness value, the gain value, and the gain index value have a one-to-one correspondence, and the correspondence relationship is pre-stored in the exposure table. After the ambient brightness value is obtained, the matching gain index value can be found in the exposure table according to the difference value between the ambient brightness value and the target brightness value.

At block 205, when the gain index value is less than the preset gain index value, it is determined whether the imaging object is stable. When the imaging object is stable, the act at block 206 is executed. When the imaging object is unstable, the act at block 207 is executed.

In the control method of embodiments of the present disclosure, a preset gain index value may be preset. In an embodiment of the present disclosure, the preset gain index value is 460. Of course, in other embodiments, the preset gain index value may also be other values. For each region in the pixel unit array, when the gain index value corresponding to the region is less than the preset gain index value, it indicates that the measured ambient brightness value of the region is high, and the electrical signal obtained by each photosensitive pixel in the region is strong, with less noise. At this time, the stability of the imaging object can be further determined.

As a possible implementation, the target image captured in the last n times of shooting are read, and the positions of the imaging object in the target images captured in the last n times of shooting are determined, and then it is determined whether the imaging object is stable based on the position change of the imaging object in the target images captured in the last n times of shooting.

Alternatively, the image processing technique based on deep learning may be employed to determine the position of the imaging object in the target image. In detail, an image feature of the imaging region of the imaging object in the target image may be identified, and then the identified image feature is input to the pre-trained image feature recognition model to determine the position of the imaging object in the target image. The sample image may be selected, and then respective objects in the sample image are labeled based on the image feature of the sample image, and the position of each object in the sample image is marked, and then the image feature recognition model is trained by using the labeled sample image. After the recognition model is trained, the target image can be identified by the trained recognition model to determine the position of the imaging object in the target image.

As another possible implementation, when the imaging device is unstable, a "ghosting" phenomenon also occurs in the captured image. Therefore, in the present disclosure, whether the imaging object is stable can be determined according to the stability of the imaging device. In detail, it is determined whether the imaging device is stable by using a sensor provided on the imaging device, and when the imaging device is unstable, it is determined that the imaging object is unstable. Thereby, it is unnecessary to train the recognition model, and then use the recognition model to determine the stability of the imaging object, which can reduce the development difficulty and cost. Moreover, by using a sensor with higher sensitivity to determine the stability of the imaging object, the accuracy of the judgment result can be improved.

For example, the imaging device may be provided with a motion sensor, such as a gyro sensor. When the gyro sensor detects that the displacement of the imaging device in each direction is less than or equal to a preset offset, the imaging device is considered to be stable. When the gyro sensor detects that the displacement of the imaging device in either direction is greater than the preset offset, the imaging device is considered to be unstable. The preset offset may be preset in the built-in program of the electronic device, or may be set by the user, which is not limited thereto. For example, the preset offset may be 0.08.

Alternatively, the imaging device may be provided with a speed sensor for detecting the moving speed of the imaging device. When the moving speed of the imaging device is greater than the predetermined speed, it is determined that the imaging device is unstable, and when the moving speed of the imaging device is less than or equal to the predetermined speed, it is determined that the imaging device is stable. The predetermined speed may be preset in a built-in program of the electronic device, or may be set by a user, which is not limited thereto.

At block 206, shooting is performed using a multi-frame high dynamic range shooting mode.

In embodiments of the present disclosure, when the imaging object is stable, the multi-frame high dynamic range shooting mode can be used for shooting, that is, the high dynamic range image is composited from the plurality of images, so that the high dynamic range image can clearly display the current shooting scene, which improves the imaging effect and imaging quality.

At block 207, shooting is performed using a single-frame high dynamic range shooting mode.

In embodiments of the present disclosure, when the imaging object is unstable, the single-frame high dynamic range shooting mode may be used for shooting. In other words, the high dynamic range image is composited by one image to prevent the phenomenon of "ghosting".

At block 208, when the gain index value is greater than the preset gain index value, the target image is captured in the dim mode.

In embodiments of the present disclosure, when the gain index value is greater than the preset gain index value, it indicates that the ambient brightness value of the region is low. At this time, the electrical signal obtained by each photosensitive pixel in the region is weak, with more noise. Therefore, the target image can be captured by switching to the dim mode (the default operation is in the vivid light mode when the imaging device is turned on).

With the control method of embodiment of the present disclosure, when the current scene is the backlight scene, it indicates that the ambient brightness values measured by respective photosensitive pixels in the pixel unit array have a significant difference. Therefore, it is required to composite a high dynamic range image to enable the high dynamics range image to clearly display the current shooting scene. When the imaging object is stable, the multi-frame high dynamic range shooting mode is employed, in other words, the high dynamic range image is composited from the plurality of images, so that the dynamic range image can clearly display the current shooting scene, which improves the imaging effect and imaging quality. When the imaging object is unstable, the single-frame high dynamic range shooting mode is used for shooting, that is, the high dynamic range image is composited by one image, such that the "ghosting" phenomenon is prevented.

As a possible implementation, as illustrated in FIG. 4, based on the embodiment illustrated in FIG. 3, the act at block 207 may specifically include the followings.

At block 301, the pixel unit array is controlled to output a plurality of original pixel information respectively at different exposure time.

In embodiments of the present disclosure, the photosensitive pixel may include a plurality of long exposure pixels, a plurality of medium exposure pixels, and a plurality of short exposure pixels. The long exposure pixel refers to that the exposure time corresponding to the photosensitive pixel is a long exposure time, and the medium exposure pixel refers to that the exposure time corresponding to the photosensitive pixel is a medium exposure time, and the short exposure pixel refers to that the exposure time corresponding to the photosensitive pixel being a short exposure time. The long exposure time > the medium exposure time > the short exposure time, in other words, the long exposure time of the long exposure pixel is greater than the medium exposure time of the medium exposure pixel, and the medium exposure time of the medium exposure pixel is greater than the short exposure time of the short exposure pixel. When the imaging device is in operation, the long exposure pixels, the medium exposure pixels, and the short exposure pixels are simultaneously exposed. The simultaneous exposure refers to that the exposure time of the medium exposure pixels and the short exposure pixels is within the exposure time of the long exposure pixels.

In detail, the long exposure pixel may be first controlled to start the exposure at the earliest, and during the exposure of the long exposure pixel, the medium exposure pixel and the short exposure pixel are controlled to be exposed, wherein the exposure deadline of the medium exposure pixel and the short exposure pixel should be same as or prior to the exposure deadline of the long exposure pixels. Or, the long exposure pixel, the medium exposure pixel and the short exposure pixel are controlled to start exposure simultaneously, in other words, the exposure start time of the long exposure pixel, the medium exposure pixel and the short exposure pixel are identical. In this case, it is unnecessary to control the pixel unit array to perform long exposure, medium exposure, and short exposure in sequence, which may reduce the shooting time of the target image.

When the imaging object is unstable, the imaging device first controls the long exposure pixels, the medium exposure pixels, and the short exposure pixels in each photosensitive pixel in the pixel unit array to be simultaneously exposed, in which the exposure time corresponding to the long exposure pixels is the initial long exposure time, the exposure time corresponding to the medium exposure pixels is the initial medium exposure time, and the exposure time corresponding to the short exposure pixels is the initial short exposure time, and the initial long exposure time, the initial medium exposure time, and the initial short exposure time are all preset. After the exposure is completed, each of the photosensitive pixels in the pixel unit array outputs a plurality of original pixel information respectively at different exposure time.

At block 302, merged pixel information is obtained by calculating the original pixel information with the same exposure time in the same photosensitive pixel.

At block 303, the target image is output according to the merged pixel information.

For example, when each of the photosensitive pixels includes one long exposure pixel, two medium exposure pixels, and one short exposure pixel, the original pixel information of the sole long exposure pixel is the long exposure merged pixel information, and a sum of the original pixel information of the two medium exposure pixels is the medium exposure merged pixel information, the original pixel information of the sole short exposure pixel is the short exposure merged pixel information. When each photosensitive pixel includes 2 long exposure pixels, 4 medium exposure pixels and 2 short exposure pixels, the sum of the original pixel information of the two long exposure pixels is the long exposure merged pixel information, and the sum of the original pixel information of the four medium exposure pixels is the medium exposure merged pixel information, and the sum of the original pixel information of the two short exposure pixels is the short exposure merged pixel information. In this way, a plurality of long exposure merged pixel information, a plurality of medium exposure merged pixel information, and a plurality of short exposure merged pixel information of the entire pixel unit array can be obtained.

Then, the long exposure sub-image is calculated according to the interpolation of the plurality of long exposure merged pixel information, the medium exposure sub-image is calculated according to the interpolation of the plurality of medium exposure merged pixel information, the short exposure sub-image is calculated according to the interpolation of the plurality of short exposure merged pixel information. Finally, the long exposure sub-image, the medium exposure sub-image and the short exposure sub-image are fused and processed to obtain the high dynamic range target image, in which the long exposure sub-image, the medium exposure sub-image and the short exposure sub-image are not three images in the traditional sense, but image portions formed by the corresponding regions of the long, short, and medium exposure pixels in the same image.

Alternatively, after the exposure of the pixel unit array is completed, on the basis of the original pixel information output by the long exposure pixels, the original pixel information of the short exposure pixels and the original pixel information of the medium exposure pixels may be superimposed on the original pixel information of the long exposure pixels. In detail, for the same photosensitive pixel, the original pixel information of the three different exposure time may be respectively given different weights, and after the original pixel information corresponding to each exposure time is multiplied by the weight, the obtained original pixel information multiplied by the weight is added as merged pixel information of one photosensitive pixel. Subsequently, since the gray level of each merged pixel information calculated according to the original pixel information of the three different exposure time changes, it is necessary to perform compression on the gray level of each merged pixel information after obtaining the merged pixel information. After the compression is completed, the target image can be obtained by performing interpolation calculation based on the merged pixel information obtained after the plurality of compressions. In this way, the dark portion of the target image has been compensated by the original pixel information output by the long exposure pixels, and the bright portion has been compressed by the original pixel information output by the short exposure pixels. Therefore, the target image does not have an overexposed region and an underexposed region, and has a higher dynamic range and better imaging effect.

Further, in order to further improve the imaging quality of the target image, after the long exposure pixels, the medium exposure pixels, and the short exposure pixels are simultaneously exposed according to the initial long exposure time, the initial medium exposure time, and the initial short exposure time respectively, a long exposure histogram can be calculated based on the original pixel information output by the long exposure pixels, a short exposure histogram can be calculated based on the original pixel information output by the short exposure pixels, and the initial long exposure time is corrected according to the long exposure histogram to obtain the corrected long exposure time, the initial short exposure time is corrected according to the short exposure histogram to obtain the corrected short exposure time. Subsequently, the long exposure pixels, the medium exposure pixels, and the short exposure pixels are controlled to be simultaneously exposed according to the corrected long exposure time, the initial medium exposure time, and the corrected short exposure time respectively.

The correction process is not in one step, but the imaging device needs to perform multiple simultaneous exposures of the long, medium and short exposure pixels. After each simultaneous exposure, the imaging device continues to correct the long exposure time and the short exposure time according to the generated long exposure histogram and short exposure histogram, and the next simultaneous exposure is performed according to the latest corrected long exposure time, the initial medium exposure time, and the latest corrected short exposure time, to continue to obtain the long exposure histogram and the short exposure histogram. This procedure is repeated until there is no underexposed region in the image corresponding to the long exposure histogram, and no overexposed region in the image corresponding to the short exposure histogram, and at this time, the corrected long exposure time and the corrected short exposure time are the final corrected long exposure time and the final corrected short exposure time. After the exposure is completed, the target image is calculated according to the output of the long exposure pixels, the medium exposure pixels, and the short exposure pixels. The calculation method is the same as that in the previous embodiment, which is not elaborated here.

There may be one or more long exposure histogram. When there is one long exposure histogram, the long exposure histogram can be generated based on the original pixel information of all long exposure pixels. When there are a plurality of long exposure histograms, the long exposure pixels can be divided into regions, and a long exposure histogram is generated according to the original pixel information of the plurality of long exposure images in each region, so that the plurality of regions correspond to the plurality of long exposure histograms. The function of dividing regions is to improve the accuracy of each corrected long exposure time and to speed up the correction process of the long exposure time. Similarly, there may be one or more short exposure histograms. When there is one short exposure histogram, the short exposure histogram can be generated based on the original pixel information of all short exposure pixels. When there is a plurality of short exposure histograms, the short exposure pixels may be divided into regions, and a short exposure histogram is generated according to the original pixel information of the plurality of short exposure pixels in each region, so that the plurality of regions correspond to the plurality of short exposure histograms. The function of dividing regions is to improve the accuracy of each corrected short exposure time to speed up the correction process of the short exposure time.

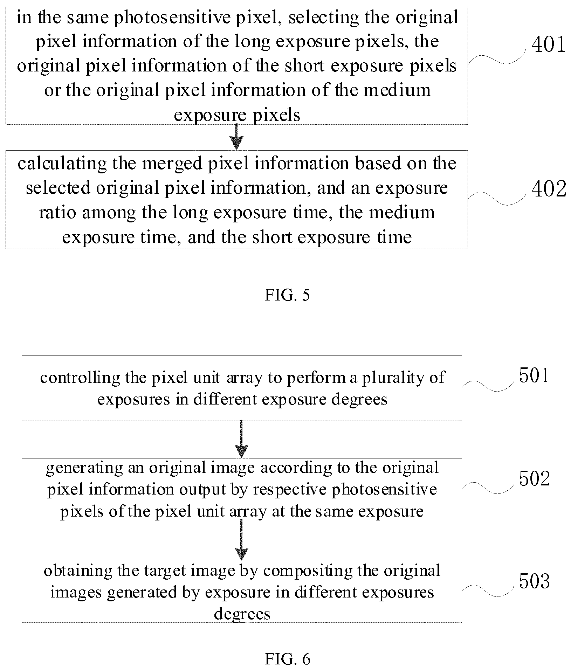

As a possible implementation, as illustrated in FIG. 5, based on the embodiment illustrated in FIG. 4, the act at block 302 may specifically include the followings.

At block 401, in the same photosensitive pixel, original pixel information of long exposure pixels, original pixel information of short exposure pixels or original pixel information of medium exposure pixels is selected.

In embodiments of the present disclosure, in the same photosensitive pixel, the original pixel information of the long exposure pixels, the original pixel information of the short exposure pixels or the original pixel information of the medium exposure pixels is selected, in other words, one original pixel information is selected from the original pixel information of the long exposure pixels, the original pixel information of the short exposure pixels and the original pixel information of the medium exposure pixels.

For example, when one photosensitive pixel includes one long exposure pixel, two medium exposure pixels, and one short exposure pixel, and when the original pixel information of the long exposure pixel is 80, the original pixel information of the two medium exposure pixels is 255, and the original pixel information of the short exposure pixel is 255, since 255 is the upper limit of the original pixel information, the original pixel information of the long exposure pixel may be selected as 80.

At block 402, merged pixel information is calculated according to the selected original pixel information and the exposure ratio among the long exposure time, the medium exposure time, and the short exposure time.

Still taking the above example, assuming that the exposure ratio among the long exposure time, the medium exposure time, and the short exposure time is 16:4:1, then the merged pixel information is: 80^{∗}16=1280.

Since the upper limit of the original pixel information in the related art is 255, by calculating the merged pixel information according to the selected original pixel information and the exposure ratio among the long exposure time, the medium exposure time, and the short exposure time, the dynamic range can be extended to obtain a high dynamic range image, thereby improving the imaging effect of the target image.

As a possible implementation, as illustrated in FIG. 6, on the basis of the embodiment illustrated in FIG. 3, the act at block 206 may specifically include the followings.

At block 501, the pixel unit array is controlled to perform a plurality of exposures with different exposure degrees.

In embodiment of the present application, the pixel unit array is controlled to perform a plurality of exposures with different exposure degrees, i.e., different exposure time. For example, the pixel unit array can be controlled to perform 3 exposures with a long exposure time, a medium exposure time, and a short exposure time. The exposure degree, i.e., the exposure time, may be preset in a built-in program of the electronic device, or may be set by the user, to enhance the flexibility and applicability of the control method.

At block 502, an original image is generated according to the original pixel information output by respective photosensitive pixels of the pixel unit array at the same exposure.

In embodiments of the present disclosure, for different exposure degrees, for example, the long exposure time, the medium exposure time, or the short exposure time, the original pixel information output by respective photosensitive pixels is different. For the same exposure, one original image is generated according to the original pixel information output by respective photosensitive pixels. For example, a long exposure original image, a medium exposure original image, and a short exposure original image are generated. for the same original image, the exposure time of different photosensitive pixels in the pixel unit array is identical, i.e., the exposure time of different photosensitive pixels of the long exposure original image is identical, the exposure time of different photosensitive pixels of the medium exposure original image is identical, and the exposure time of different photosensitive pixels of the short exposure original image is identical.

At block 503, the target image is obtained by compositing the original images generated by exposure with different exposure degrees.

In embodiments of the present disclosure, after the original images generated with different exposure degrees are obtained, the original images generated with different exposure degrees may be composited to obtain the target image. For example, for the original images generated with different exposure degrees, different weights may be respectively assigned to them, and then the original images generated by exposure with different exposure degrees can be composited to obtain the target image. The weights corresponding to the original images generated with different exposure degrees may be preset in the built-in program of the electronic device, or may be set by the user, which is not limited thereto.

For example, when the pixel unit array is controlled to perform three exposures with a long exposure time, a medium exposure time, and a short exposure time respectively, a long exposure original image, a medium exposure original image, and a short exposure original image are generated according to original pixel information output by respective photosensitive pixels. Then, the long exposure original image, the medium exposure original image, and the short exposure original image are composited according to the preset weights corresponding to the long exposure original image, the medium exposure original image, and the short exposure original image, and a high dynamic range target image can be obtained.

It should be noted that the above method in which the high dynamic range target image is composited by using three original images is only an example. In other embodiments, the number of the original images may also be two, four five, six, which is not specifically limited thereto. For example, when the number of the original images is two, the pixel unit array may be controlled to perform two exposures with a long exposure time and a short exposure time, respectively, or the pixel unit array may be controlled to perform two exposures with a medium exposure time and a short exposure time, respectively, or the pixel unit array may be controlled to perform two exposures with a long exposure time and a medium exposure time, respectively.

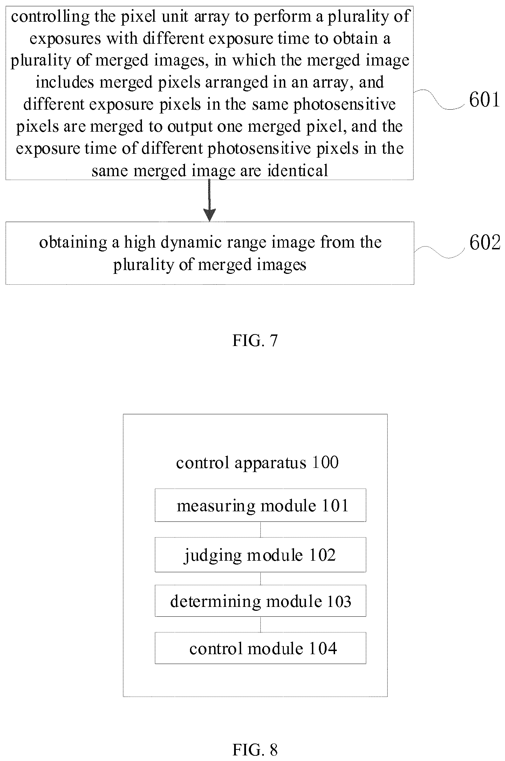

As a possible implementation, as illustrated in FIG. 7, on the basis of the embodiment illustrated in FIG. 3, the act at block 208 may specifically include the followings.

At block 601, the pixel unit array is controlled to perform a plurality of exposures with different exposure time to obtain a plurality of merged images, in which the merged image includes the merged pixels arranged in an array, and the plurality of long exposure pixels, the plurality of medium exposure pixels, and the plurality of short exposure pixels in the same photosensitive pixel are merged to output one merged pixel, and the exposure time of different photosensitive pixels in the same merged image is identical.

In embodiments of the present disclosure, when the gain index value is greater than the preset gain index value, it indicates that the ambient brightness value corresponding to the region is low. At this time, the electrical signal obtained by each photosensitive pixel in the region is weak, with less noise. A plurality of long exposure pixels, a plurality of medium exposure pixels, and a plurality of short exposure pixels in one photosensitive pixel may be merged to output one merged pixel, thereby reducing noise of the merged image.

In embodiments of the present disclosure, the pixel unit array is controlled to perform a plurality of exposures with different exposure time to obtain a plurality of merged images. The merged image includes merged pixels arranged in an array, and the plurality of long exposure pixels, the plurality of medium exposure pixels, and the plurality of short exposure pixels in the same photosensitive pixel are merged to output one merged pixel. The plurality of merged images may be, for example, three merged images, and the three merged images include a long-exposure merged image, a medium exposure merged image, and a short-exposure merged image, and the exposure time of the three merged images is different. In detail, the exposure time of the long-exposure merged image is greater than the exposure time of the medium exposure merged image, and the exposure time of the medium exposure merged image is greater than the exposure time of the short exposure merged image. The value of each exposure time may be preset in the built-in program of the electronic device, or may be set by the user, which is no limit thereto. The exposure time of different photosensitive pixels of the same merged image is identical, that is, the exposure time of different photosensitive pixels of the long exposure merged image are identical, the exposure time of different photosensitive pixels of the medium exposure merged image are identical, and the exposure time of different photosensitive pixels of the short exposure merged image are identical.

At block 602, a high dynamic range image is obtained according to the plurality of merged images.

Finally, the high dynamic range image can be obtained by compositing the plurality of merged images. For example, the three merged images processed by different weights are composited to obtain a high dynamic range image, in which the weight corresponding to the merged image can be preset in the built-in program of the electronic device, or can be set by the user, which is not limited thereto.

It should be noted that the above method in which the high dynamic range image is composited by using three merged images is only an example. In other embodiments, the number of merged images may also be two, four, five, six, which is not limited thereto.

In order to implement the above embodiments, the present disclosure also provides a control apparatus.

FIG. 8 is a schematic block diagram of a control apparatus according to Embodiment 7 of the present disclosure.

The control apparatus of embodiments of the present disclosure is applied to an imaging device, and the imaging device includes a pixel unit array composed of a plurality of photosensitive pixels.

As illustrated in FIG. 8, the control apparatus 100 includes: a measuring module 101, a judging module 102, a determining module 103, and a control module 104.

The measuring module 101 is configured to control the pixel unit array to measure ambient brightness values.

The judging module 102 is configured to determine whether a current scene is a backlight scene according to the ambient brightness values measured by the pixel unit array.

As a possible implementation, the judging module 102 is specifically configured to: generate a gray histogram based on the gray values corresponding to the measured ambient brightness values of the pixel unit array; and determine whether the current scene is the backlight scene according to the ratio of the number of photosensitive pixels in each gray range.

The determining module 103 is configured to determine an ambient brightness value of a region in the pixel unit array according to the ambient brightness values measured by respective photosensitive pixels in the pixel unit array, when the current scene is the backlight scene, in which the region includes at least one photosensitive pixel.

As a possible implementation, the determining module 103 is configured to: perform region division on the pixel unit array according to the ambient brightness values measured by respective photosensitive pixels in the pixel unit array, in which the ambient brightness values of the photosensitive pixels belonging to the same region are similar; and determine the ambient brightness value of each region in the pixel unit array according to the ambient brightness values measured by the photosensitive pixels in the same region.

As another possible implementation, the determining module 103 is configured to: determine respective regions of the pixel unit array that is fixedly divided in advance; and determine the ambient brightness value of each region in the pixel unit array according to the ambient brightness values measured by photosensitive pixels in the same region.

The control module 104 is configured to control the photosensitive pixels in the region to shoot in a corresponding shooting mode, according to the ambient brightness value measured in the region and a stability of an imaging object in the region.

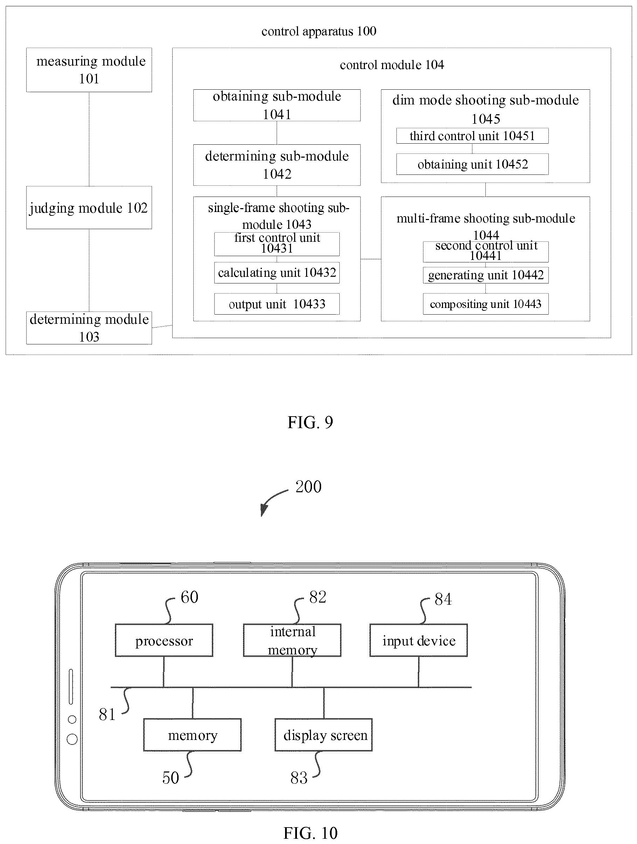

Further, in a possible implementation of the embodiments of the present disclosure, as illustrated in FIG. 9, on the basis of the embodiment illustrated in FIG. 8, the control apparatus 100 may further include the followings.

As a possible implementation, the control module 104 includes an obtaining sub-module 1041, a determining sub-module 1042, a single-frame shooting sub-module 1043, a multi-frame shooting sub-module 1044 and a dim mode shooting sub-module 1045.

The obtaining sub-module 1041 is configured to obtain a gain index value of the region according to the ambient brightness value and a preset target brightness value.

The determining sub-module 1042 is configured to determine whether the imaging object is stable when the gain index value is less than the preset gain index value.

As a possible implementation, the determining sub-module 1042 is specifically configured to: read the target images captured in the last n times of shooting, and determine the positions of the imaging object in the target images captured in the last n times of shooting; and determine whether the imaging object is stable based on the position change of the imaging object in the target images captured in the last n times of shooting.

As another possible implementation, the determining sub-module 1042 is specifically configured to: determine whether the imaging device is stable by using a sensor disposed on the imaging device; and determine that the imaging object is unstable when the imaging device is unstable.

The single-frame shooting sub-module 1043 is configured to shoot using a single-frame high dynamic range shooting mode, when the imaging object is unstable.

The multi-frame shooting sub-module 1044 is configured to shoot using a multi-frame high dynamic range shooting mode when the imaging object is stable.

The dim mode shooting sub-module 1045 is configured to capture the target image in the dim mode when the gain index value is greater than the preset gain index value.

As a possible implementation, the photosensitive pixel includes a plurality of long exposure pixels, a plurality of medium exposure pixels, and a plurality of short exposure pixels, and the single-frame shooting sub-module 1043 includes a first control unit 10431, a calculating unit 10432 and an output unit 10433.

The first control unit 10431 is configured to control the pixel unit array to output a plurality of original pixel information at different exposure time, in which the long exposure time of the long exposure pixel is greater than the medium exposure time of the medium exposure pixel, and the medium exposure time of the medium exposure pixels is greater than the exposure time of the short exposure pixels.

The calculating unit 10432 is configured to calculate the merged pixel information according to the original pixel information with the same exposure time in the same photosensitive pixel.

As a possible implementation, the calculating unit 10432 is configured to: select original pixel information of the long exposure pixels, original pixel information of the short exposure pixels, or original pixel information of the medium exposure pixels in the same photosensitive pixel; and calculate and obtain the merged pixel information according to the selected original pixel information, and the exposure ratio among the long exposure time, the medium exposure time, and the short exposure time.

The output unit 10433 is configured to output a target image according to the merged pixel information.

As a possible implementation, the multi-frame shooting sub-module 1044 includes a second control unit 10441, a generating unit 10442 and a compositing unit 10443.

The second control unit 10441 is configured to control the pixel unit array to perform a plurality of exposures with different exposure degrees.

The generating unit 10442 is configured to generate an original image according to the original pixel information output by respective photosensitive pixels of the pixel unit array at the same exposure.

The compositing unit 10443 is configured to composite the original images generated by using different exposure degrees to obtain the target image.

As a possible implementation, the dim mode shooting sub-module 1045 includes a thrd control unit 10451 and an obtaining unit 10452.

The third control unit 10451 is configured to control the pixel unit array to perform a plurality of exposures with different exposure time to obtain a plurality of merged images, in which the merged image includes merged pixels arranged in an array, and the plurality of long exposure pixels, the plurality of medium exposure pixels, and the plurality of short exposure pixels in the same photosensitive pixel are merged to output one merged pixel, and the exposure time of the different photosensitive pixels of the same merged image are identical.

The obtaining unit 10452, configured to obtain a high dynamic range image according to the plurality of merged images.

It should be noted that the above explanation of the embodiments of the control method is also applicable to the control apparatus 100 of the embodiment, and details are not elaborated here.

With The control apparatus of embodiments of the present disclosure, the pixel unit array is controlled to measure the ambient brightness values, whether the current scene is the backlight scene is determined according to the ambient brightness values measured by the pixel unit array, and if the current scene is the backlight scene, the ambient brightness value of each region in the pixel unit array is determined according to the ambient brightness values measured by photosensitive pixels in the pixel unit array, and the photosensitive pixels in each region are controlled to shoot in the corresponding shooting mode according to the ambient brightness value of the region and the stability of imaging object in the region. In the present disclosure, by selecting the suitable shooting mode according to the ambient brightness value measured in each region and the stability of imaging object in each region, i.e., adopting the corresponding shooting mode for shooting according to different shooting scenes, it can solve the problem that the image captured is vague when the imaging object is unstable, improve the imaging effect and imaging quality, and improve the user's shooting experience.

In order to implement the above embodiments, the present disclosure further provides an imaging device. The imaging device includes a pixel unit array composed of a plurality of photosensitive pixels. The imaging device further includes a processor.

The processor is configured to: control the pixel unit array to measure ambient brightness values; determine whether a current scene is a backlight scene, according to the ambient brightness values measured by the pixel unit array; when the current scene is the backlight scene, determine an ambient brightness value of a region in the pixel unit array according to the ambient brightness values measured by photosensitive pixels in the pixel unit array, in which the region includes at least one photosensitive pixel; and control the photosensitive pixels in the region to shoot in a corresponding shooting mode, according to the ambient brightness value of the region and the stability of imaging object in the region.

It should be noted that the above explanation of the embodiments of the control method is also applicable to the imaging device of the embodiment, and details are not elaborated here.

With the imaging device of the embodiments of the present disclosure, the pixel unit array is controlled to measure the ambient brightness values, whether the current scene is the backlight scene is determined according to the ambient brightness values measured by the pixel unit array, and if the current scene is the backlight scene, the ambient brightness value of each region in the pixel unit array is determined according to the ambient brightness values measured by photosensitive pixels in the pixel unit array, and the photosensitive pixels in each region are controlled to shoot in the corresponding shooting mode according to the ambient brightness value of the region and the stability of imaging object in the region. In the present disclosure, by selecting the suitable shooting mode according to the ambient brightness value measured in each region and the stability of imaging object in each region, i.e., adopting the corresponding shooting mode for shooting according to different shooting scenes, it can solve the problem that the image captured is vague when the imaging object is unstable, improve the imaging effect and imaging quality, and improve the user's shooting experience.

In order to implement the above embodiments, the present disclosure further provides an electronic device. The electronic device includes a memory, a processor, and a computer program stored on the memory and executable by the processor. When the processor executes the program, the control method provided in the above embodiment is implemented.

In order to implement the above embodiments, the present disclosure further provides a computer readable storage medium having a computer program stored thereon, wherein when the processor executes the program, the control method provided in the above embodiment of the present disclosure is implemented.

As illustrated in FIG. 10, the present disclosure further provides an electronic device 200. The electronic device 200 includes a memory 50 and a processor 60. Computer readable instructions are stored in the memory 50. When the computer readable instructions are executed by the processor 60, the processor 60 is caused to perform the control method of any of the above embodiments.

FIG. 10 is a schematic diagram illustrating the internal structure of the electronic device 200 in an embodiment. The electronic device 200 includes a processor 60, a memory 50 (e.g., a non-volatile storage medium), an internal memory 82, a display screen 83, and an input device 84 that are coupled via a system bus 81. The memory 50 of the electronic device 200 stores an operating system and computer readable instructions. The computer readable instructions are executable by processor 60 to implement the control method of embodiments of the present disclosure. The processor 60 is configured to provide computing and control capabilities to support the operation of the entire electronic device 200. The internal memory 50 of the electronic device 200 provides an environment for the operation of computer readable instructions in the memory 52. The display screen 83 of the electronic device 200 may be a liquid crystal display screen or an electronic ink display screen. The input device 84 may be a touch layer covered on the display screen 83, or may be a button, a trackball or a touch pad provided on the housing of the electronic device 200, or an external keyboard, trackpad or mouse. The electronic device 200 may be a mobile phone, a tablet computer, a notebook computer, a personal digital assistant, or a wearable device (e.g., a smart bracelet, a smart watch, a smart helmet, smart glasses). It will be understood by those skilled in the art that the structure illustrated in FIG. 10 is only a schematic diagram of a part of the structure related to the solution of the present disclosure, and does not constitute a limitation of the electronic device 200 to which the solution of the present disclosure is applied, and specifically, the electronic device 200 may include more or few components than those illustrated in the figures, or some components may be combined, or the electronic device 200 may have different component arrangement.

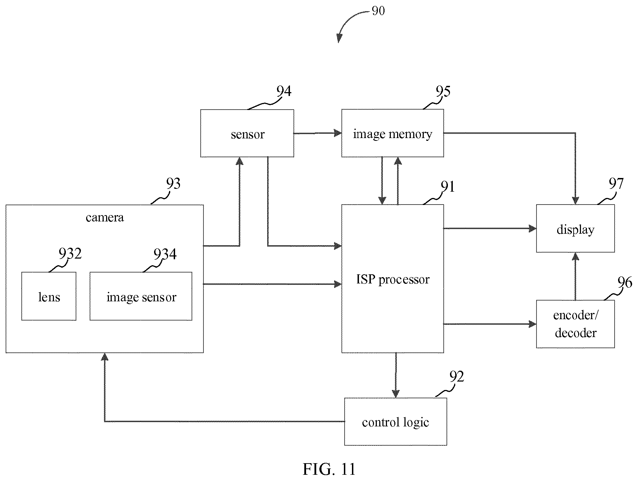

As illustrated in FIG. 11, the electronic device 200 of embodiments of the present disclosure includes an image processing circuit 90. The image processing circuit 90 can be implemented by using hardware and/or software components, including various types of processing unit defining ISP (Image Signal Processing) pipelines. FIG. 11 is a schematic diagram of an image processing circuit 90 in one embodiment. As illustrated in FIG. 11, for convenience of explanation, only various aspects of the image processing technique related to embodiments of the present disclosure are illustrated.

As illustrated in FIG. 11, the image processing circuit 90 includes an ISP processor 91 (ISP processor 91may be the processor 60) and a control logic 92. The image data captured by a camera 93 is first processed by the ISP processor 91, which analyzes the image data to capture image statistics information that can be used to determine one or more control parameters of the camera 93. The camera 93 may include one or more lenses 932 and an image sensor 934. The image sensor 934 may include a color filter array (e.g., a Bayer filter), and the image sensor 934 may obtain light intensity and wavelength information captured by each imaging pixel and provide a set of original image data that may be processed by ISP processor 91. A sensor 94, such as a gyroscope, can provide acquired image processing parameters (such as anti-shake parameters) to the ISP processor 91 based on an interface type of the sensor 94. The interface of the sensor 94 may be a SMIA (Standard Mobile Imaging Architecture) interface, other serial or parallel camera interface, or a combination of the above.

In addition, the image sensor 934 may further transmit the original image data to the sensor 94. The sensor 94 may provide the original image data to ISP processor 91 based on the interface type of the sensor 94, or may store the original image data into the image memory 95.

The ISP processor 91 processes the original image data pixel by pixel in a plurality of formats. For example, each image pixel may have a bit depth of 8, 10, 12, or 14 bits, and the ISP processor 91 may perform one or more image processing operations on the original image data, and collect statistical information about the image data. The image processing operations may be performed with the same or different bit depth precision.

The ISP processor 91 may also receive image data from the image memory 95. For example, the sensor 94 transmits original image data to the image memory 95 via the interface, and the original image data in the image memory 95 is provided to the ISP processor 91 for processing. The image memory 95 may be the memory 50, a portion of the memory 50, a storage device, or a separate dedicated memory within an electronic device, and may include DMA (Direct Memory Access) characteristics.

When receiving the original image data from the image sensor 934 or from the sensor 94 or from the image memory 95, the ISP processor 91 may perform one or more image processing operations, such as time domain filtering. The processed image data may be sent to the image memory 95 for additional processing before being displayed. The ISP processor 91 receives the processed data from the image memory 95 and performs image data processing on the processed data in the original domain and in the RGB and YCbCr color spaces. The image data processed by the ISP processor 91 may be output to the display 97 (the display 97 can include the display screen 83) for viewing by the user and/or further processing by a graphics engine or a GPU (Graphics Processing Unit). Further, the output of the ISP processor 91 may also be sent to the image memory 95, and the display 97 may read the image data from the image memory 95. In one embodiment, the image memory 95 may be configured to implement one or more frame buffers. Additionally, the output of ISP processor 91 may be sent to an encoder/decoder 96 for encoding/decoding image data. The encoded image data may be saved and decompressed before being displayed on the display 97. The encoder/decoder 96 may be implemented by a CPU or GPU or coprocessor.

The statistics data determined by the ISP processor 91 may be sent to the control logic 92. For example, the statistical data may include statistical information of the image sensor 934 such as auto exposure, auto white balance, auto focus, flicker detection, black level compensation, shading correction of the lens 932, and the like. The control logic 92 may include processing elements and/or microcontrollers that execute one or more routines (such as firmware), and one or more routines may determine the control parameters of the camera 93 and the control parameters of the ISP processor 91 based on received statistical data. For example, the control parameters of the camera 93 may include the control parameters of the sensor 94 (e.g., gain, integration time for exposure control, anti-shake parameters), flash control parameters of the camera, control parameters (e.g., focal length for focus or zoom) of the lens 932, or the combination of these parameters. The ISP control parameters may include gain levels and color correction matrices for automatic white balance and color adjustment (e.g., during RGB processing), as well as shading correction parameters of the lens 932.

For example, the following steps are executed using the processor 60 of FIG. 10 or the image processing circuit 90 (specifically, the ISP processor 91) of FIG. 11 to implement the control method:
controlling the pixel unit array to measure ambient brightness values;
determining whether the current scene is a backlight scene, according to the ambient brightness values measured by the pixel unit array;
when the current scene is a backlight scene, determining an ambient brightness value of a region in the pixel unit array according to the ambient brightness values measured by respective photosensitive pixels in the pixel unit array, in which the region includes at least one photosensitive pixel;
controlling the photosensitive pixels in the region to shoot in the corresponding shooting mode, according to the ambient brightness value of the region and the stability of imaging object in the region.

For another example, the following steps are executed by using the processor in FIG. 10 or using the image processing circuit 90 (specifically, an ISP processor) in FIG. 11 to implement the control method:
obtaining a gain index value of the region according to the ambient brightness value and the preset target brightness value;
when the gain index value is less than the preset gain index value, determining whether the imaging object is stable;
when the imaging object is unstable, shooting in a single-frame high dynamic range shooting mode;
when the imaging object is stable, shooting in a multi-frame high dynamic range shooting mode.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present disclosure, "a plurality of' means two or more than two, unless specified otherwise.

The flow chart or any process or method described herein in other manners may represent a module, segment, or portion of code that comprises one or more executable instructions to implement the specified logic function(s) or that comprises one or more executable instructions of the steps of the progress. Although the flow chart shows a specific order of execution, it is understood that the order of execution may differ from that which is depicted. For example, the order of execution of two or more boxes may be scrambled relative to the order shown.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be implemented by hardware, software, firmware or the combination thereof. In the above embodiments, a plurality of steps or methods may be implemented by the software or firmware stored in the memory and executed by the appropriate instruction execution system. For example, if it is implemented by the hardware, likewise in another embodiment, the steps or methods may be implemented by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

## Claims

1. A control method, applied to an imaging device, wherein the imaging device comprises a pixel unit array composed of a plurality of photosensitive pixels, the control method comprises:
controlling the photosensitive pixels of the pixel unit array to measure ambient brightness values (101; 201);
being **characterized in that**, the control method further comprises:
determining whether a current scene is a backlight scene according to the ambient brightness values measured by the pixel unit array (102; 202), comprising: generating a gray histogram based on gray values corresponding to the ambient brightness values measured by the photosensitive pixels of the pixel unit array, and determining whether the current scene is the backlight scene based on a ratio of the number of photosensitive pixels in each gray scale range of the gray histogram;
when the current scene is backlight scene, determining an ambient brightness value of a region in the pixel unit array according to the ambient brightness values measured by respective photosensitive pixels in the pixel unit array, comprising: dividing the photosensitive pixels with similar ambient brightness values in the pixel unit array into a same region, the region comprising at least one photosensitive pixel (103; 203); and
controlling the photosensitive pixels in the region to shoot in a shooting mode according to the ambient brightness value of the region and a stability of an imaging object in the region (104), comprising: obtaining a gain index value of the region according to the ambient brightness value of the region and a preset target brightness value (204); when the gain index value is less than a preset gain index value, determining whether the imaging object is stable (205); when the imaging object is unstable, controlling the photosensitive pixels in the region to shoot in a single-frame high dynamic range shooting mode (207); and when the imaging object is stable, controlling the photosensitive pixels in the region to shoot in a multi-frame high dynamic range shooting mode (206).

2. The control method according to claim 1, further comprising:
when the gain index value is greater than the preset gain index value, controlling the photosensitive pixels in the region to capture a target image in a dim mode (208).

3. The control method according to claim 1 or 2, wherein the photosensitive pixel comprises a plurality of long exposure pixels, a plurality of medium exposure pixels, and a plurality of short exposure pixels, wherein controlling the photosensitive pixels in the region to shoot in the single-frame high dynamic range shooting mode (207) comprises:
controlling the pixel unit array to output a plurality of original pixel information respectively at different exposure time (301), wherein a long exposure time of the long exposure pixels is greater than a medium exposure time of the medium exposure pixels, and the medium exposure time of the medium exposure pixels is greater than a short exposure time of the short exposure pixels;
calculating a merged pixel information according to the original pixel information having the same exposure time in the same photosensitive pixel (302); and
outputting the target image according to the merged pixel information (303).

4. The control method according to claim 3, wherein calculating the merged pixel information according to the original pixel information having the same exposure time in the same photosensitive pixel (302), comprises:
in the same photosensitive pixel, selecting the original pixel information of the long exposure pixels, the original pixel information of the short exposure pixels or the original pixel information of the medium exposure pixels (401); and
calculating the merged pixel information based on the selected original pixel information, and an exposure ratio among the long exposure time, the medium exposure time, and the short exposure time (402).

5. The control method according to any of claims 1-4, wherein controlling the photosensitive pixels in the region to shoot in the multi-frame high dynamic range shooting mode (206) comprises:
controlling the pixel unit array to perform a plurality of exposures in different exposure degrees (501);
generating an original image according to the original pixel information output by respective photosensitive pixels of the pixel unit array at the same exposure (502); and
obtaining the target image by compositing the original images generated by exposure in different exposures degrees (503).

6. The control method according to claim 2, wherein capturing the target image in the dim mode (208), comprises:
controlling the pixel unit array to perform a plurality of exposures with different exposure time to obtain a plurality of merged images, wherein the merged image comprises merged pixels arranged in an array, and the plurality of long exposure pixels, the plurality of medium exposure pixels, and the plurality of short exposure pixels in the same photosensitive pixel are merged to output one merged pixel, and the exposure time of different photosensitive pixels in the same merged image is identical (601); and
obtaining a high dynamic range image from the plurality of merged images (602).

7. A control apparatus (100), applied to an imaging device, wherein the imaging device comprises a pixel unit composed of a plurality of photosensitive pixels, the control apparatus (100) comprises:
a measuring module (101), configured to control the photosensitive pixels of the pixel unit array to measure ambient brightness values;
being **characterized in that**, the control apparatus (100) further comprises:
a judging module (102), configured to determine whether a current scene is a backlight scene according to the ambient brightness values measured by the pixel unit array by generating a gray histogram based on gray values corresponding to the ambient brightness values measured by the photosensitive pixels of the pixel unit array, and determining whether the current scene is the backlight scene based on a ratio of the number of photosensitive pixels in each gray scale range of the gray histogram;
a determining module (103), configured to, when the current scene is the backlight scene, determine an ambient brightness value of a region in the pixel unit array according to the ambient brightness value measured by the photosensitive pixels in the pixel unit array by dividing the photosensitive pixels with similar ambient brightness values in the pixel unit array into a same region, the region comprising at least one photosensitive pixel; and
a control module (104), configured to control the photosensitive pixels in the region to shoot in a shooting mode, according to the ambient brightness value of the region and a stability of an imaging object in the region,
wherein the control module (104) comprises:
an obtaining sub-module (1041), configured to obtain a gain index value of the region according to the ambient brightness value of the region and a preset target brightness value;
a determining sub-module (1042), configured to determine whether the imaging object is stable when the gain index value is less than a preset gain index value;
a single-frame shooting sub-module (1043), configured to control the photosensitive pixels in the region to shoot in a single-frame high dynamic range shooting mode when the imaging object is unstable; and
a multi-frame shooting sub-module (1044), configured to control the photosensitive pixels in the region to shoot in a multi-frame high dynamic range shooting mode when the imaged object is stable.

8. The control apparatus (100) according to claim 7, wherein, the control module (104) further comprises:
a dim mode shooting sub-module (1045), configured to control the photosensitive pixels in the region to capture a target image in a dim mode when the gain index value is greater than the preset gain index value.

9. The control apparatus (100) according to claim 7 or 8, wherein, the photosensitive pixel comprises a plurality of long exposure pixels, a plurality of medium exposure pixels, and a plurality of short exposure pixels, and the single-frame shooting sub-module (1043) comprises:
a first control unit (10431), configured to control the pixel unit array to output a plurality of original pixel information respectively at different exposure time, wherein a long exposure time of the long exposure pixels is greater than a medium exposure time of the medium exposure pixels, and the medium exposure time of the medium exposure pixels is greater than a short exposure time of the short exposure pixels;
a calculating unit (10432), configured to calculate a merged pixel information according to the original pixel information having the same exposure time in the same photosensitive pixel; and
an output unit (10433), configured to output the target image according to the merged pixel information.

10. The control apparatus (100) according to claim 9, wherein the calculating unit (10432) is configured to:
in the same photosensitive pixel, select the original pixel information of the long exposure pixels, the original pixel information of the short exposure pixels or the original pixel information of the medium exposure pixels; and
calculate the merged pixel information based on the selected original pixel information, and an exposure ratio among the long exposure time, the medium exposure time, and the short exposure time.

11. The control apparatus (100) according to any of claims 8-10, wherein the multi-frame shooting sub-module (1044) comprises:
a second control unit (10441), configured to control the pixel unit array to perform a plurality of exposures in different exposure degrees;
a generating unit (10442), configured to generate an original image according to the original pixel information output by respective photosensitive pixels of the pixel unit array at the same exposure; and
a compositing unit (10443), configured to obtain the target image by compositing the original images generated by exposure in different exposures degrees.

12. The control apparatus (100) according to claim 8, wherein the dim mode shooting sub-module (1045) comprises:
a third control unit (10451), configured to control the pixel unit array to perform a plurality of exposures with different exposure time to obtain a plurality of merged images, wherein the merged image comprises merged pixels arranged in an array, and the plurality of long exposure pixels, the plurality of medium exposure pixels, and the plurality of short exposure pixels in the same photosensitive pixel are merged to output one merged pixel, and the exposure time of different photosensitive pixels in the same merged image is identical; and
an obtaining unit (10452), configured to obtain a high dynamic range image from the plurality of merged images.

13. An imaging device, comprising:
a pixel unit array composed of a plurality of photosensitive pixels; and
a processor, configured to control the pixel unit array to measure ambient brightness values, and to perform the control method of any of claims 1-6 based on the ambient brightness values.

## Patentansprüche

1. Steuerungsverfahren, angewandt auf eine Bildgebungsvorrichtung, wobei die Bildgebungsvorrichtung ein Pixeleinheitenfeld umfasst, das aus einer Vielzahl von lichtempfindlichen Pixeln besteht, wobei das Steuerungsverfahren umfasst:
Steuern der lichtempfindlichen Pixel des Pixeleinheitenfelds zum Messen von Umgebungshelligkeitswerten (101; 201);
**dadurch gekennzeichnet, dass** das Steuerungsverfahren ferner umfasst:
Bestimmen, ob gemäß den durch das Pixeleinheitenfeld (102; 202) gemessenen Umgebungshelligkeitswerten eine aktuelle Szene eine Gegenlichtszene ist, umfassend: Erzeugen eines Grauwerthistogramms basierend auf Grauwerten entsprechend den durch die lichtempfindlichen Pixel des Pixeleinheitenfelds gemessenen Umgebungshelligkeitswerten und Bestimmen, ob basierend auf einem Verhältnis der Anzahl der lichtempfindlichen Pixel in jedem Grauskalenbereich des Grauwerthistogramms die aktuelle Szene die Gegenlichtszene ist;
wenn die aktuelle Szene eine Gegenlichtszene ist, Bestimmen eines Umgebungshelligkeitswerts eines Bereichs in dem Pixeleinheitenfeld gemäß den durch jeweilige lichtempfindliche Pixel in dem Pixeleinheitenfeld gemessenen Umgebungshelligkeitswerten, umfassend: Unterteilen der lichtempfindlichen Pixel mit ähnlichen Umgebungshelligkeitswerten in dem Pixeleinheitenfeld in einen gleichen Bereich, wobei der Bereich mindestens ein lichtempfindliches Pixel (103; 203) umfasst; und
Steuern der lichtempfindlichen Pixel in dem Bereich zum Aufnehmen in einem Aufnahmemodus gemäß dem Umgebungshelligkeitswert des Bereichs und einer Stabilität eines Bildgebungsobjekts in dem Bereich (104), umfassend: Erhalten eines Verstärkungsindexwerts des Bereichs gemäß dem Umgebungshelligkeitswert des Bereichs und einem voreingestellten Sollhelligkeitswert (204); wenn der Verstärkungsindexwert kleiner als ein voreingestellter Verstärkungsindexwert ist, Bestimmen, ob das Bildgebungsobjekt stabil ist (205); wenn das Bildgebungsobjekt instabil ist, Steuern der lichtempfindlichen Pixel in dem Bereich, um in einem Einzelbildaufnahmemodus mit hohem Dynamikbereich (207) aufzunehmen; und wenn das Bildgebungsobjekt stabil ist, Steuern der lichtempfindlichen Pixel in dem Bereich, um in einem Mehrbildaufnahmemodus mit hohem Dynamikbereich (206) aufzunehmen.

2. Steuerungsverfahren gemäß Anspruch 1, ferner umfassend:
wenn der Verstärkungsindexwert größer als der voreingestellte Verstärkungsindexwert ist, Steuern der lichtempfindlichen Pixel in dem Bereich, um ein Sollbild in einem Dämmermodus (208) aufzunehmen.

3. Steuerungsverfahren gemäß Anspruch 1 oder 2, wobei das lichtempfindliche Pixel eine Vielzahl von lang belichteten Pixeln, eine Vielzahl von mittel belichteten Pixeln und eine Vielzahl von kurz belichteten Pixeln umfasst, wobei das Steuern der lichtempfindlichen Pixel in dem Bereich, der im Einzelbildaufnahmemodus mit hohem Dynamikbereich (207) aufgenommen werden soll, umfasst:
Steuern des Pixeleinheitenfelds, um eine Vielzahl von ursprünglichen Pixelinformationen jeweils mit verschiedenen Belichtungszeiten (301) auszugeben, wobei eine lange Belichtungszeit der lang belichteten Pixel größer als eine mittlere Belichtungszeit der mittel belichteten Pixel und die mittlere Belichtungszeit der mittel belichteten Pixel größer als eine kurze Belichtungszeit der kurz belichteten Pixel ist;
Berechnen von zusammengeführten Pixelinformationen gemäß den ursprünglichen Pixelinformationen, die die gleiche Belichtungszeit im gleichen lichtempfindlichen Pixel (302) aufweisen; und
Ausgeben des Sollbildes gemäß den zusammengeführten Pixelinformationen (303).

4. Steuerungsverfahren gemäß Anspruch 3, wobei das Berechnen der zusammengeführten Pixelinformationen gemäß den ursprünglichen Pixelinformationen, die die gleiche Belichtungszeit im gleichen lichtempfindlichen Pixel (302) aufweisen, umfasst:
im gleichen lichtempfindlichen Pixel Auswählen der ursprünglichen Pixelinformationen der lang belichteten Pixel, der ursprünglichen Pixelinformationen der kurz belichteten Pixel oder der ursprünglichen Pixelinformationen der mittel belichteten Pixel (401); und
Berechnen der zusammengeführten Pixelinformationen basierend auf den ausgewählten ursprünglichen Pixelinformationen und einem Belichtungsverhältnis zwischen der langen Belichtungszeit, der mittleren Belichtungszeit und der kurzen Belichtungszeit (402).

5. Steuerungsverfahren gemäß einem der Ansprüche 1-4, wobei die Steuerung der lichtempfindlichen Pixel in dem Bereich, der im Mehrbildaufnahmemodus mit hohem Dynamikbereich (206) aufgenommen werden soll, umfasst:
Steuern des Pixeleinheitenfelds, um eine Vielzahl von Belichtungen in verschiedenen Belichtungsgraden (501) durchzuführen;
Erzeugen eines ursprünglichen Bildes gemäß den ursprünglichen Pixelinformationen, die durch die jeweiligen lichtempfindlichen Pixel des Pixeleinheitenfelds bei der gleichen Belichtung ausgegeben werden (502); und
Erhalten des Sollbildes durch Zusammensetzen der ursprünglichen Bilder, die durch Belichtung in verschiedenen Belichtungsgraden (503) erzeugt wurden.

6. Steuerungsverfahren gemäß Anspruch 2, wobei das Erfassen des Sollbildes im Dämmermodus (208) umfasst:
Steuern des Pixeleinheitenfelds, um eine Vielzahl von Belichtungen mit verschiedener Belichtungszeit durchzuführen, um eine Vielzahl von zusammengesetzten Bildern zu erhalten, wobei das zusammengesetzte Bild zusammengesetzte Pixel umfasst, die in einem Feld angeordnet sind, und die Vielzahl von lang belichteten Pixeln, die Vielzahl von mittel belichteten Pixeln und die Vielzahl von kurz belichteten Pixeln in dem gleichen lichtempfindlichen Pixel zusammengesetzt werden, um ein zusammengesetztes Pixel auszugeben, und die Belichtungszeit von verschiedenen lichtempfindlichen Pixeln in dem gleichen zusammengesetzten Bild identisch (601) ist; und
Erhalten eines Bildes mit hohem Dynamikbereich aus der Vielzahl der zusammengeführten Bilder (602).

7. Steuervorrichtung (100), angewandt auf eine Bildgebungsvorrichtung, wobei die Bildgebungsvorrichtung eine Pixeleinheit umfasst, die aus einer Vielzahl von lichtempfindlichen Pixeln besteht, wobei die Steuervorrichtung (100) umfasst:
ein Messmodul (101), das dazu ausgelegt ist, die lichtempfindlichen Pixel des Pixeleinheitenfelds zu steuern, um die Umgebungshelligkeitswerte zu messen;
**dadurch gekennzeichnet, dass** die Steuervorrichtung (100) ferner umfasst:
ein Beurteilungsmodul (102), das dazu ausgelegt ist zu bestimmen, ob gemäß den durch das Pixeleinheitenfeld gemessenen Umgebungshelligkeitswerten eine aktuelle Szene eine Gegenlichtszene ist, durch Erzeugen eines Grauwerthistogramms basierend auf Grauwerten entsprechend den durch die lichtempfindlichen Pixel des Pixeleinheitenfelds gemessenen Umgebungshelligkeitswerten und Bestimmen, ob basierend auf einem Verhältnis der Anzahl der lichtempfindlichen Pixel in jedem Grauskalenbereich des Grauwerthistogramms die aktuelle Szene die Gegenlichtszene ist;
ein Bestimmungsmodul (103), das dazu ausgelegt ist, wenn die aktuelle Szene die Gegenlichtszene ist, einen Umgebungshelligkeitswert eines Bereichs in dem Pixeleinheitenfeld gemäß dem durch die lichtempfindlichen Pixel in dem Pixeleinheitenfeld gemessenen Umgebungshelligkeitswert zu bestimmen, indem die lichtempfindlichen Pixel mit ähnlichen Umgebungshelligkeitswerten in dem Pixeleinheitenfeld in einen gleichen Bereich unterteilt werden, wobei der Bereich mindestens ein lichtempfindliches Pixel umfasst; und
ein Steuermodul (104), das dazu ausgelegt ist, die lichtempfindlichen Pixel in dem Bereich zu steuern, um in einem Aufnahmemodus gemäß dem Umgebungshelligkeitswert des Bereichs und einer Stabilität eines Bildgebungsobjekts in dem Bereich aufzunehmen,
wobei das Steuermodul (104) umfasst:
ein Erhaltungsuntermodul (1041), das dazu ausgelegt ist, einen Verstärkungsindexwert des Bereichs gemäß dem Umgebungshelligkeitswert des Bereichs und einem voreingestellten Sollhelligkeitswert zu erfassen;
ein Bestimmungsuntermodul (1042), das dazu ausgelegt ist zu bestimmen, ob das Bildgebungsobjekt stabil ist, wenn der Verstärkungsindexwert kleiner als ein voreingestellter Verstärkungsindexwert ist;
ein Einzelbildaufnahmeuntermodul (1043), das dazu ausgelegt ist, die lichtempfindlichen Pixel in dem Bereich zu steuern, um in einem Einzelbildaufnahmemodus mit hohem Dynamikbereich aufzunehmen, wenn das Bildgebungsobjekt instabil ist; und
ein Mehrbildaufnahmeuntermodul (1044), das dazu ausgelegt ist, die lichtempfindlichen Pixel in dem Bereich zu steuern, um in einem Mehrbildaufnahmemodus mit hohem Dynamikbereich aufzunehmen, wenn das Bildgebungsobjekt stabil ist.

8. Steuervorrichtung (100) gemäß Anspruch 7, wobei das Steuermodul (104) ferner umfasst:
ein Dämmermodusaufnahmeuntermodul (1045), das dazu ausgelegt ist, die lichtempfindlichen Pixel in dem Bereich zu steuern, um ein Sollbild in einem Dämmermodus aufzunehmen, wenn der Verstärkungsindexwert größer als der voreingestellte Verstärkungsindexwert ist.

9. Steuervorrichtung (100) gemäß Anspruch 7 oder 8, wobei das lichtempfindliche Pixel eine Vielzahl von lang belichteten Pixeln, eine Vielzahl von mittel belichteten Pixeln und eine Vielzahl von kurz belichteten Pixeln umfasst, und das Einzelbildaufnahmeuntermodul (1043) umfasst:
eine erste Steuereinheit (10431), die dazu ausgelegt ist, das Pixeleinheitenfeld zu steuern, um eine Vielzahl von ursprünglichen Pixelinformationen jeweils mit verschiedenen Belichtungszeiten auszugeben, wobei eine lange Belichtungszeit der lang belichteten Pixel größer als eine mittlere Belichtungszeit der mittel belichteten Pixel und die mittlere Belichtungszeit der mittel belichteten Pixel größer als eine kurze Belichtungszeit der kurz belichteten Pixel ist;
eine Berechnungseinheit (10432), die dazu ausgelegt ist, zusammengeführte Pixelinformationen gemäß den ursprünglichen Pixelinformationen zu berechnen, die die gleiche Belichtungszeit im gleichen lichtempfindlichen Pixel aufweisen; und
eine Ausgabeeinheit (10433), die dazu ausgelegt ist, das Sollbild gemäß den zusammengeführten Pixelinformationen auszugeben.

10. Steuervorrichtung (100) gemäß Anspruch 9, wobei die Recheneinheit (10432) dazu ausgelegt ist:
im gleichen lichtempfindlichen Pixel die ursprünglichen Pixelinformationen der lang belichteten Pixel, der ursprünglichen Pixelinformationen der kurz belichteten Pixel oder der ursprünglichen Pixelinformationen der mittel belichteten Pixel auszuwählen; und
die zusammengeführten Pixelinformationen basierend auf den ausgewählten ursprünglichen Pixelinformationen und einem Belichtungsverhältnis zwischen der langen Belichtungszeit, der mittleren Belichtungszeit und der kurzen Belichtungszeit zu berechnen.

11. Steuervorrichtung (100) gemäß einem der Ansprüche 8-10, wobei das Mehrbildaufnahmeuntermodul (1044) umfasst:
eine zweite Steuereinheit (10441), die dazu ausgelegt ist, das Pixeleinheitenfeld zu steuern, um eine Vielzahl von Belichtungen in verschiedenen Belichtungsgraden durchzuführen;
eine Erzeugungseinheit (10442), die dazu ausgelegt ist, ein ursprüngliches Bild gemäß den ursprünglichen Pixelinformationen, die durch die jeweiligen lichtempfindlichen Pixel des Pixeleinheitenfelds bei der gleichen Belichtung ausgegeben werden, zu erzeugen; und
eine Zusammensetzungseinheit (10443), die dazu ausgelegt ist, das Sollbild durch Zusammensetzen der ursprünglichen Bilder zu erhalten, die durch Belichtung in verschiedenen Belichtungsgraden erzeugt wurden.

12. Steuervorrichtung (100) gemäß Anspruch 8, wobei das Dämmermodusaufnahmeuntermodul (1045) umfasst:
eine dritte Steuereinheit (10451), die dazu ausgelegt ist, das Pixeleinheitenfeld zu steuern, um eine Vielzahl von Belichtungen mit verschiedener Belichtungszeit durchzuführen, um eine Vielzahl von zusammengesetzten Bildern zu erhalten, wobei das zusammengesetzte Bild zusammengesetzte Pixel umfasst, die in einem Feld angeordnet sind, und die Vielzahl von lang belichteten Pixeln, die Vielzahl von mittel belichteten Pixeln und die Vielzahl von kurz belichteten Pixeln in dem gleichen lichtempfindlichen Pixel zusammengesetzt werden, um ein zusammengesetztes Pixel auszugeben, und die Belichtungszeit von verschiedenen lichtempfindlichen Pixeln in dem gleichen zusammengesetzten Bild identisch ist; und
eine Erhaltungseinheit (10452), die dazu ausgelegt ist, ein Bild mit hohem Dynamikbereich aus der Vielzahl von zusammengeführten Bildern zu erhalten.

13. Bildgebungsvorrichtung, umfassend:
ein Pixeleinheitenfeld, das aus einer Vielzahl von lichtempfindlichen Pixeln besteht; und
einen Prozessor, der dazu ausgelegt ist, das Pixeleinheitenfeld zu steuern, um Umgebungshelligkeitswerte zu messen und das Steuerungsverfahren gemäß einem der Ansprüche 1-6 basierend auf den Umgebungshelligkeitswerten durchzuführen.

## Revendications

1. Procédé de commande, appliqué à un dispositif d'imagerie, le dispositif d'imagerie comprenant une matrice d'unités de pixels composée d'une pluralité de pixels photosensibles, le procédé de commande comprenant :
la commande des pixels photosensibles de la matrice d'unités de pixels pour mesurer des valeurs de luminosité ambiante (101 ; 201) ;
étant **caractérisé en ce que** le procédé de commande comprend en outre :
la détermination qu'une scène en cours est une scène rétroéclairée ou non en fonction des valeurs de luminosité ambiante mesurées par la matrice d'unités de pixels (102 ; 202), comprenant : la génération d'un histogramme de gris sur la base de valeurs de gris correspondant aux valeurs de luminosité ambiante mesurées par les pixels photosensibles de la matrice d'unités de pixels, et la détermination que la scène en cours est la scène rétroéclairée ou non sur la base d'un rapport entre le nombre de pixels photosensibles dans chaque gamme d'échelle de gris de l'histogramme de gris ;
quand la scène en cours est une scène rétroéclairée, la détermination d'une valeur de luminosité ambiante d'une région dans la matrice d'unités de pixels en fonction des valeurs de luminosité ambiante mesurées par des pixels photosensibles respectifs dans la matrice d'unités de pixels, comprenant : la séparation des pixels photosensibles avec des valeurs de luminosité ambiante similaires dans la matrice d'unités de pixels en une même région, la région comprenant au moins un pixel photosensible (103 ; 203) ; et
la commande des pixels photosensibles dans la région pour effectuer une prise de vue dans un mode de prise de vue en fonction de la valeur de luminosité ambiante de la région et d'une stabilité d'un objet d'imagerie dans la région (104), comprenant : l'obtention d'une valeur d'indice de gain de la région en fonction de la valeur de luminosité ambiante de la région et d'une valeur de luminosité cible prédéfinie (204) ; quand la valeur d'indice de gain est inférieure à une valeur d'indice de gain prédéfinie, la détermination que l'objet d'imagerie est stable ou non (205) ; quand l'objet d'imagerie est instable, la commande des pixels photosensibles dans la région pour effectuer une prise de vue dans un mode de prise de vue unique à grande gamme dynamique (207) ; et quand l'objet d'imagerie est stable, la commande des pixels photosensibles dans la région pour effectuer une prise de vue dans un mode de prise de vues multiples à grande gamme dynamique (206).

2. Procédé de commande selon la revendication 1, comprenant en outre :
quand la valeur d'indice de gain est supérieure à la valeur d'indice de gain prédéfinie, la commande des pixels photosensibles dans la région pour capturer une image cible dans un mode sombre (208).

3. Procédé de commande selon la revendication 1 ou 2, dans lequel le pixel photosensible comprend une pluralité de pixels d'exposition longue, une pluralité de pixels d'exposition moyenne et une pluralité de pixels d'exposition courte, la commande des pixels photosensibles dans la région pour effectuer une prise de vue dans le mode de prise de vue unique à grande gamme dynamique (207) comprenant :
la commande de la matrice d'unités de pixels pour produire une pluralité d'informations de pixel initiales respectivement à un temps d'exposition différent (301), un temps d'exposition long des pixels d'exposition longue étant supérieur à un temps d'exposition moyen des pixels d'exposition moyenne, et le temps d'exposition moyen des pixels d'exposition moyenne étant supérieur à un temps d'exposition court des pixels d'exposition courte ;
le calcul d'informations de pixel fusionnées en fonction des informations de pixel initiales ayant le même temps d'exposition dans le même pixel photosensible (302) ; et
la production de l'image cible en fonction des informations de pixel fusionnées (303).

4. Procédé de commande selon la revendication 3, dans lequel le calcul des informations de pixel fusionnées en fonction des informations de pixel initiales ayant le même temps d'exposition dans le même pixel photosensible (302) comprend :
dans le même pixel photosensible, la sélection des informations de pixel initiales des pixels d'exposition longue, des informations de pixel initiales des pixels d'exposition courte ou des informations de pixel initiales des pixels d'exposition moyenne (401) ; et
le calcul des informations de pixel fusionnées sur la base des informations de pixel initiales sélectionnées, et d'un rapport d'exposition parmi le temps d'exposition long, le temps d'exposition moyen et le temps d'exposition court (402).

5. Procédé de commande selon l'une quelconque des revendications 1 à 4, dans lequel la commande des pixels photosensibles dans la région pour effectuer une prise de vue dans le mode de prise de vues multiples à grande gamme dynamique (206) comprend :
la commande de la matrice d'unités de pixels pour effectuer une pluralité d'expositions à différents degrés d'exposition (501) ;
la génération d'une image initiale en fonction des informations de pixel initiales produites par des pixels photosensibles respectifs de la matrice d'unités de pixels à la même exposition (502) ; et
l'obtention de l'image cible par composition des images initiales générées par exposition à différents degrés d'exposition (503).

6. Procédé de commande selon la revendication 2, dans lequel la capture de l'image cible dans le mode sombre (208) comprend :
la commande de la matrice d'unités de pixels pour effectuer une pluralité d'expositions avec un temps d'exposition différent pour obtenir une pluralité d'images fusionnées, l'image fusionnée comprenant des pixels fusionnés agencés en une matrice, et la pluralité de pixels d'exposition longue, la pluralité de pixels d'exposition moyenne et la pluralité de pixels d'exposition courte dans le même pixel photosensible étant fusionnés pour produire un pixel fusionné, et le temps d'exposition de différents pixels photosensibles dans la même image fusionnée étant identique (601) ; et
l'obtention d'une image à grande gamme dynamique à partir de la pluralité d'images fusionnées (602).

7. Appareil de commande (100), appliqué à un dispositif d'imagerie, le dispositif d'imagerie comprenant une unité de pixels composée d'une pluralité de pixels photosensibles, l'appareil de commande (100) comprenant :
un module de mesure (101), configuré pour commander les pixels photosensibles de la matrice d'unités de pixels pour mesurer des valeurs de luminosité ambiante ;
étant **caractérisé en ce que** l'appareil de commande (100) comprend en outre :
un module de jugement (102), configuré pour déterminer si une scène en cours est une scène rétroéclairée en fonction des valeurs de luminosité ambiante mesurées par la matrice d'unités de pixels en générant un histogramme de gris sur la base de valeurs de gris correspondant aux valeurs de luminosité ambiante mesurées par les pixels photosensibles de la matrice d'unités de pixels, et en déterminant si la scène en cours est la scène rétroéclairée sur la base d'un rapport entre le nombre de pixels photosensibles dans chaque gamme d'échelle de gris de l'histogramme de gris ;
un module de détermination (103), configuré pour, quand la scène en cours est une scène rétroéclairée, déterminer une valeur de luminosité ambiante d'une région dans la matrice d'unités de pixels en fonction de la valeur de luminosité ambiante mesurée par les pixels photosensibles dans la matrice d'unités de pixels en séparant les pixels photosensibles avec des valeurs de luminosité ambiante similaires dans la matrice d'unités de pixels en une même région, la région comprenant au moins un pixel photosensible ; et
un module de commande (104), configuré pour commander les pixels photosensibles dans la région pour effectuer une prise de vue dans un mode de prise de vue en fonction de la valeur de luminosité ambiante de la région et d'une stabilité d'un objet d'imagerie dans la région,
le module de commande (104) comprenant :
un sous-module d'obtention (1041), configuré pour obtenir une valeur d'indice de gain de la région en fonction de la valeur de luminosité ambiante de la région et d'une valeur de luminosité cible prédéfinie ;
un sous-module de détermination (1042), configuré pour déterminer si l'objet d'imagerie est stable quand la valeur d'indice de gain est inférieure à une valeur d'indice de gain prédéfinie ;
un sous-module de prise de vue unique (1043), configuré pour commander les pixels photosensibles dans la région pour effectuer une prise de vue dans un mode de prise de vue unique à grande gamme dynamique quand l'objet d'imagerie est instable ; et
un sous-module de prise de vues multiples (1044), configuré pour commander les pixels photosensibles dans la région pour effectuer une prise de vue dans un mode de prise de vues multiples à grande gamme dynamique quand l'objet imagé est stable.

8. Appareil de commande (100) selon la revendication 7, dans lequel le module de commande (104) comprend en outre :
un sous-module de prise de vue en mode sombre (1045), configuré pour commander les pixels photosensibles dans la région pour capturer une image cible dans un mode sombre quand la valeur d'indice de gain est supérieure à la valeur d'indice de gain prédéfinie.

9. Appareil de commande (100) selon la revendication 7 ou 8, dans lequel le pixel photosensible comprend une pluralité de pixels d'exposition longue, une pluralité de pixels d'exposition moyenne et une pluralité de pixels d'exposition courte, et le sous-module de prise de vue unique (1043) comprend :
une première unité de commande (10431), configurée pour commander la matrice d'unités de pixels pour produire une pluralité d'informations de pixel initiales respectivement à un temps d'exposition différent, un temps d'exposition long des pixels d'exposition longue étant supérieur à un temps d'exposition moyen des pixels d'exposition moyenne, et le temps d'exposition moyen des pixels d'exposition moyenne étant supérieur à un temps d'exposition court des pixels d'exposition courte ;
une unité de calcul (10432), configurée pour calculer des informations de pixel fusionnées en fonction des informations de pixel initiales ayant le même temps d'exposition dans le même pixel photosensible ; et
une unité de production (10433), configurée pour produire l'image cible en fonction des informations de pixel fusionnées.

10. Appareil de commande (100) selon la revendication 9, dans lequel l'unité de calcul (10432) est configurée pour :
dans le même pixel photosensible, sélectionner les informations de pixel initiales des pixels d'exposition longue, les informations de pixel initiales des pixels d'exposition courte ou les informations de pixel initiales des pixels d'exposition moyenne ; et
calculer les informations de pixel fusionnées sur la base des informations de pixel initiales sélectionnées, et d'un rapport d'exposition parmi le temps d'exposition long, le temps d'exposition moyen et le temps d'exposition court.

11. Appareil de commande (100) selon l'une quelconque des revendications 8 à 10, dans lequel le sous-module de prise de vues multiples (1044) comprend :
une deuxième unité de commande (10441), configurée pour commander la matrice d'unités de pixels pour effectuer une pluralité d'expositions à différents degrés d'exposition ;
une unité de génération (10442), configurée pour générer une image initiale en fonction des informations de pixel initiales produites par des pixels photosensibles respectifs de la matrice d'unités de pixels à la même exposition ; et
une unité de composition (10443), configurée pour obtenir l'image cible en composant les images initiales générées par exposition à différents degrés d'exposition.

12. Appareil de commande (100) selon la revendication 8, dans lequel le sous-module de prise de vue en mode sombre (1045) comprend :
une troisième unité de commande (10451), configurée pour commander la matrice d'unités de pixels pour effectuer une pluralité d'expositions avec un temps d'exposition différent pour obtenir une pluralité d'images fusionnées, l'image fusionnée comprenant des pixels fusionnés agencés en une matrice, et la pluralité de pixels d'exposition longue, la pluralité de pixels d'exposition moyenne et la pluralité de pixels d'exposition courte dans le même pixel photosensible étant fusionnés pour produire un pixel fusionné, et le temps d'exposition de différents pixels photosensibles dans la même image fusionnée étant identique ; et
une unité d'obtention (10452), configurée pour obtenir une image à grande gamme dynamique à partir de la pluralité d'images fusionnées.

13. Dispositif d'imagerie, comprenant :
une matrice d'unités de pixels composée d'une pluralité de pixels photosensibles ; et
un processeur, configuré pour commander la matrice d'unités de pixels pour mesurer des valeurs de luminosité ambiante, et pour effectuer le procédé de commande de l'une quelconque des revendications 1 à 6 sur la base des valeurs de luminosité ambiante.
